# EUROPEAN PATENT APPLICATION

(11) **EP 1 091 198 A1**
(43) Date of publication of application: **11.04.2001**
(21) Application number: 00119897.7
(22) Date of filing: 13.09.2000
(51) Int. Cl.: G01F 23/26

(54) **Capacitive level sensor device for a dielectric liquid**

(30) Priority: 14.09.1999 IT TO990783
(71) Applicant: BITRON S.p.A., 10042 Nichelino (Torino) (IT)
(72) Inventor: Boccaccio, Giovanni, 16134 Genova (IT)
(74) Representative: Quinterno, Giuseppe

(57) **Abstract**

The device comprises an electrical measurement capacitor (C1) with a first pair of co-axial cylindrical plates (4,5) between which is defined a gap (6) in hydraulic and aerial communication with the internal region of the tank (T) in such a way the level of the liquid within it is substantially the same as the level (L) of the liquid in tank (T); and an electrical reference capacitor (C2) comprising a second pair of co-axial cylindrical plates (12,13) between which is defined a further gap (14) maintained, in use, full of this liquid.

## Description

The present invention relates to a capacitive level sensor device for a dielectric liquid in particular for detecting the fuel level in a vehicle tank.

The object of the present invention is to provide a capacitive level sensor device distinguished by a good measurement precision upon variation in the dielectric characteristics of the liquid and other parameters capable of modifying the geometry of the device.

This and other objects are achieved according to the invention with a capacitive level sensor device the salient characteristics of which are defined in the annexed Claim 1.

Further characteristics and advantages of the invention will become apparent from the following detailed description given purely by way of non-limitative example, with reference to the attached drawings, in which:
Figure 1 is plan view from above of a capacitive level sensor device according to the invention; and
Figures 2 to 4 are sectioned views taken respectively on the line II-II, III-III and IV-IV of Figure 1.

In the drawings a capacitive level sensor device according to the invention is generally indicated 1.

In the illustrated embodiment, the sensor device 1 comprises an upper end element 2 and a lower end element 3 formed, for example, of moulded plastics material.

In the illustrated embodiment, between the end elements 2 and 3 of the device extend three electrical capacitors, respectively indicated C1, C2 and C3.

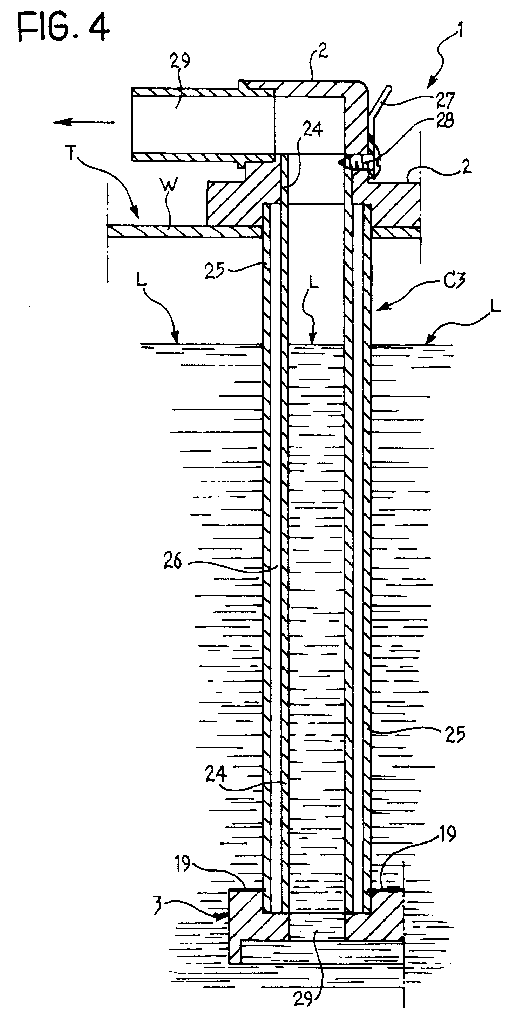

The capacitor C1, hereinafter defined as the measurement capacitor, comprises a pair of co-axial, respectively internal and external cylindrical metal plates 4 and 5 (Figure 3).

In the illustrated embodiment the inner plate 4 of the measurement capacitor C1 protrudes upwardly beyond the edge of plate 5, for reasons which will described hereinafter.

The ends of the inner plate 4 are sealingly closed, respectively by the upper end element 2 and the lower end element 3. The internal region of this plate 4 is empty.

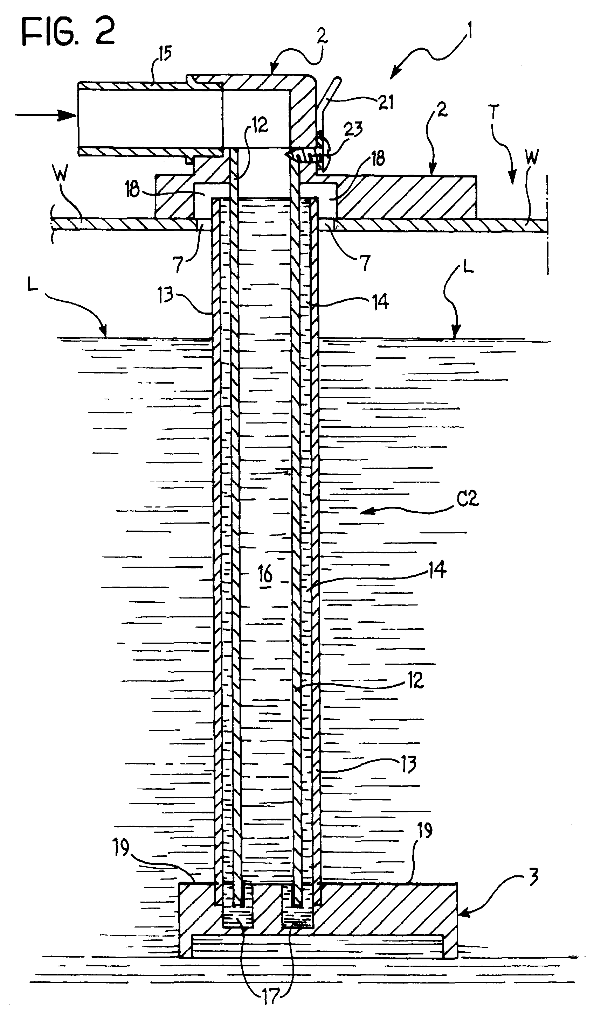

Between the plates 4 and 5 is defined an annular gap 6, maintained operatively in conditions of hydraulic and aerial communication with the internal region of the tank T with which the sensor device 1 is associated. In Figures 2 to 4 the tank T is only partially illustrated. In particular, a portion of the upper wall W of the tank is shown, which has an opening 7 to which the upper end element 2 of the level sensor device is sealingly connected.

As is seen in Figure 3, through a passage 9 formed in the upper end element 2 the gap 6 of the measurement capacitor C1 communicates with the region 8 overlying the level L of the liquid in the tank T. Below this, the gap 6 communicates with the lower part of the internal region of the tank T through one or more passages 10 formed in the lower end element 3 of the sensor device. In operation, the instantaneous level of the liquid in the gap 6 of the measuring capacitor C1 is substantially the same as the level L of this liquid in the tank T, as shown in Figure 3. The passage or passages 10 can have calibrated sections, determined in such a way that the level of the liquid in the gap 6 follows the variations of the level in the tank T in a damped manner.

The capacitor C2, which will now be described, defines a reference capacity and also comprises a pair of co-axial cylindrical metal plates 12 and 13, which are preferably the same as the plates 4 and 5 respectively of the capacitor C1, and which also extend between the end elements 2 and 3 of the sensor device.

In use the gap 14 defined between the plates 12 and 13 of the reference capacitor C2 is maintained full of liquid.

In the exemplary embodiment illustrated, the level sensor is a fuel level sensor for the tank of a vehicle provided with a fuel supply system having an aspiration or delivery duct which carries the fuel from the tank to the motor and a return duct for conveying back to the tank fuel not utilised by the motor. In such a fuel level sensor the inner plate 12 of the reference capacitor C2 is conveniently connected at the top to the said return duct via a connection coupling 15 (Figure 2) of the upper end element 2 of the sensor device.

The region 16 within the plate 12 communicates at its lower end with the gap 14 via passages 17 formed in the lower end element 3 of the sensor device.

In general, the plates 12 and 13 of the reference capacitor C2 form a siphon, and the upper edge of the outer plate 13, situated at a level slightly lower than the top of the plate 12, acts as an overflow threshold or hydraulic head for the fuel returning from the motor to the tank T. This returning fuel, in use, reaches the internal region 16 within the plate 12 through the coupling 15, then flows through the passages 17 and arrives at the gap 14 and then overflows into the tank T by passing over the upper end of the outer plate 13 and passing through one or more passages 18 provided in the upper end element 2.

The outer plates 5 and 13 of the measurement capacitor C1 and reference C2 respectively are maintained at the same potential, for example by means of a conductive connecting layer 19 carried by the upper face of the lower end element 3 and which interconnect these plates. The equipotential connection of the said plates can however be achieved in other ways, for example by the upper end element 2.

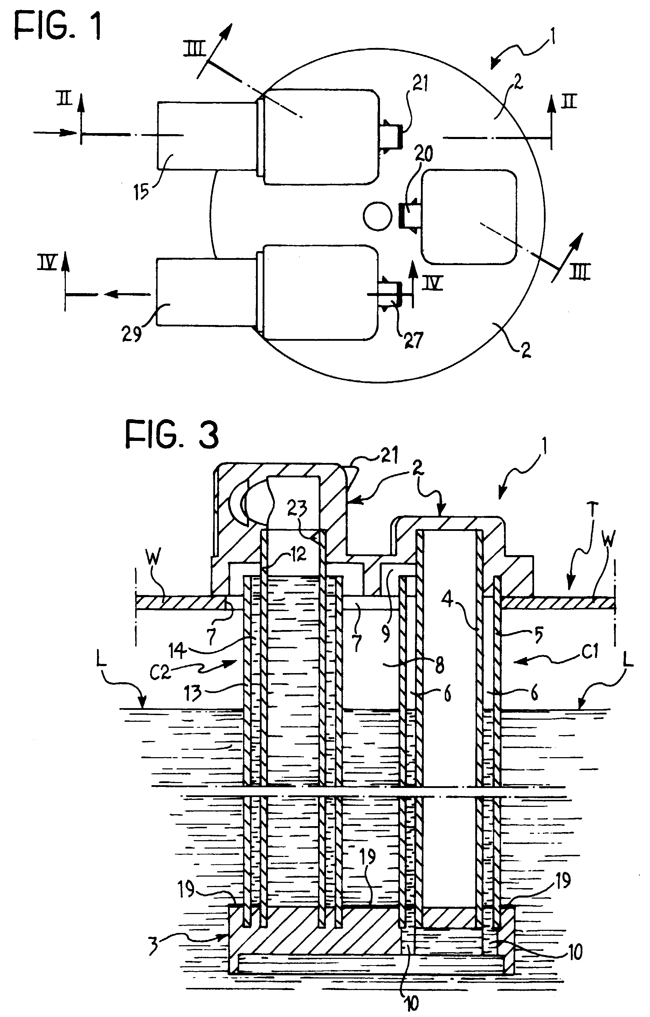

The inner plates 4 and 12 of these capacitors are however electrically accessible via connection terminals indicated 20 and 21 in figures 1 and 2.

Figure 2 shows in particular the way the terminal 21 is connected with the internal plate 12 of reference capacitor C2, formed by means of a metal connecting screw 23. The connection terminal 20 is connected to the inner plate 3 of the capacitor C1 in a similar manner.

Naturally, other connection means, known per se, can be utilised in place of those described above and illustrated in the drawings.

In operation, the electrical capacity of the capacitors C1 varies upon variation of the level L of the liquid in the tank T, and therefore in the gap 6 of this capacitor.

This electrical capacity depends not only on the geometry of the said capacitor, but also on the dielectric constant of the liquid, which is susceptible of variation by the effect of external parameters such as the temperature or a variation in the chemical or physical characteristics of the liquid itself. Such variations detrimentally affect the accuracy of the measurement of the level.

Reference capacitor C2 makes it possible to measure a reference capacity essentially influenced only by the variations in the dielectric characteristics of the liquid. The electrical capacity of the capacitor C2, can first be utilised advantageously as a reference to compensate the variations in the capacity measured by measurement capacitor C1 due to variations in the dielectric characteristics of the liquid.

As mentioned above, the electrical capacity of the measurement capacitor C1 also depends on the geometry of its plates. The effect of variations in ambient parameters, such as, temperature, causes variations in this geometry which, to a first approximation, could be considered invariable, but is in reality variable, and therefore capable of detrimentally affecting the accuracy of the determination of the level. Thus, for example, a significant variation in the temperature can lead to a variation in the distance between the plates.

In order to compensate for the effects of the geometric variations of the measurement capacitor the level sensor device 1 can advantageously include a second reference capacitor such as that indicated C3 in Figure 4.

The reference capacitor C3 also comprises two co-axial cylindrical, respectively internal and external metal plates 24 and 25, between which is defined a gap 26. This gap is sealed both at the top by the upper end element 2, and at the bottom by the lower end element 3 of the sensor device.

Preferably, the plates 24 and 25 are also the same as the plates 4, 12 and, respectively 5, 13 of the capacitors C1, C3. The gap 26 is full of air.

In operation, the electrical capacity of the reference capacitor C3 is not affected by variations in the characteristics of the liquid contained in the tank. Rather, this electrical capacity is possibly indicative of variation in the measurement capacity (capacitor C1) attributable essentially to geometric variations of the measurement capacitor induced by variations in the ambient parameters such as temperature.

The outer plate 25 of the reference capacitor C3 is also maintained at the same potential as the outer plates of the other capacitors C1 and C2, for example by means of conductive cladding 19 of the lower end element 3, which contacts it.

The inner plate 24 of this capacitor C3 is on the other hand electrically accessible from the outside, for example via a terminal connection member 27 (Figures 1 and 4) connected to this plate for example by means of a metal screw 28 (Figure 4).

Conveniently, but not necessarily, the inner plate 24 of the reference capacitor C3 may be utilised as an aspiration or delivery duct for withdrawing liquid from the tank T. In this case, as shown in Figure 4, the lower end of this plate communicates with the lower part of the inner region of the tank through a passage 29 formed in the lower end element 3 of the sensor device, whilst the other end of this plate is connectable to the motor by means of a delivery duct (not illustrated) and connector such as that indicated 29 in Figures 1 and 4.

Additionally, or alternatively, the fuel aspiration or delivery duct can be connected to the internal passage within the plate C1, which passage must thus necessarily be in communication with the internal region within the tank T.

Naturally, the principle of the invention remaining the same, the embodiments and details of construction can be widely varied with respect to what has been described and illustrated purely by way of non-limitative example, without by this departing from the ambit of the invention as defined in the annexed Claims.

## Claims

1. A capacitive level sensor (L) for a dielectric liquid, in particular for the fuel in a tank (T) of a vehicle, comprising
an electrical measurement capacitor (C1) with a first pair of co-axial cylindrical plates (4, 5) between which is defined a gap (6) maintained, in use, in conditions of hydraulic and aerial communication with the internal region within the tank (T), in such a way that the instantaneous level of the liquid in the said gap (6) is substantially equal to the level (L) of the liquid in the tank (T); and
a (first) electrical reference capacitor (C2) comprising a second pair of co-axial cylindrical plates (12, 13) between which is defined a further gap (14) maintained, in use, full of said liquid.

2. A capacitive sensor device according to Claim 1, for the fuel tank of a vehicle provided with a fuel supply system including a fuel aspiration or delivery duct which extends from the tank (T) to the motor, and with a return duct for conveying fuel not utilised by the motor back to the tank (T); characterised in that the inner plate (12) of the (first) reference capacitor (C2) is connected at the top to the said return duct and, together with the outer plate (13), defines a siphon intended to be traversed by the return fuel flowing towards the tank (T).

3. A capacitive sensor device according to Claim 1 or Claim 2, characterised in that the measurement capacitor (C1) and the (first) reference capacitor (C2) are substantially geometrically identical to one another.

4. A capacitive sensor device according to any preceding Claim, characterised in that it further includes a second electrical reference capacitor (C3) with a further pair of co-axial cylindrical plates (24, 25) between which is defined a sealed gap (26) filled with air.

5. A capacitive level sensor device according to Claims 2 and 4, characterised in that the inner plate (24) of the second reference capacitor (C3) is connected to the top to the said fuel delivery or aspiration duct.

6. A capacitive level sensor device according to Claims 2 and 4 or 5, in which the passage defined within the inner plate (4) of the measurement capacitor (C1) is connected to the top to the said fuel delivery or aspiration duct, and at the bottom to the internal region of the tank (T).
